# DEMANDE DE BREVET EUROPEEN

(11) **EP 4 001 702 A1**
(43) Date de publication de la demande: **25.05.2022**
(21) Numéro de dépôt: 21206907.4
(22) Date de dépôt: 08.11.2021
(51) Int. Cl.: F16H 57/04, F02C 7/36, F16H 57/08

(54) **COLLECTEUR D'HUILE POUR UN DISPOSITIF DE TRANSMISSION DE COUPLE D'UNE TURBOMACHINE D'AÉRONEF**

(30) Priorité: 16.11.2020 FR 2011728
(71) Demandeur: SAFRAN, 75015 Paris (FR); Safran Transmission Systems, 92700 Colombes (FR)
(72) Inventeur: MORELLI, Boris Pierre Marcel, 77550 MOISSY-CRAMAYEL (FR); BETBEDER-LAÜQUE, Xavier Roger, 77550 MOISSY-CRAMAYEL (FR); CHARRIER, Mathieu Jean, 77550 MOISSY-CRAMAYEL (FR)
(74) Mandataire: Gevers & Orès

(57) **Abrégé**

L'invention concerne un collecteur d'huile (20) pour un dispositif de transmission de couple (100) d'une turbomachine d'aéronef (1), ce collecteur d'huile (20) étant configuré pour collecter de l'huile projetée, caractérisé en ce qu'il comprend :
- au moins une paroi (30, 30') formée au moins en partie par une structure (50) en treillis, et
- au moins un récupérateur (40a, 40b) situé à une extrémité de la paroi (30a, 30a', 30b, 30b') et configuré pour récupérer l'huile captée par la paroi (30, 30') et destinée à s'écouler depuis cette paroi (30, 30') jusqu'au récupérateur (40a, 40b).

## Description

### Domaine technique de l'invention

L'invention concerne un collecteur d'huile pour un dispositif de transmission de couple d'une turbomachine d'aéronef.

### Arrière-plan technique

Le rôle d'un dispositif de transmission de couple tel qu'un réducteur mécanique, comme par exemple du type décrit dans le document FR-A1-3 076 853, est de modifier le rapport de vitesse et de couple entre l'axe d'entrée et l'axe de sortie d'un système mécanique. L'état de l'art comprend également les documents FR-A1-2 942 284, FR-A1-2 987 416, FR-A1-3 008 462, FR-A1-3 008 463, FR-A1-3 041 054, FR-A1-3 065 773, FR-A1-3 073 915 et FR-A1-3 092 889, ainsi que les documents WO-A1-2019/141920, EP-A1-2 719 927 et WO-A1-2011/129076

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entrainant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound » :
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Les engrènements des réducteurs sont lubrifiés par de l'huile. L'huile de lubrification est chauffée en fonctionnement car elle absorbe de l'énergie calorifique générée par le réducteur. La température de l'huile a un impact sur sa viscosité et sur son efficacité de lubrification. Il est donc important d'évacuer l'huile chaude après la lubrification du réducteur, afin de la recycler.

Cependant, une fois lubrifiés, les satellites du réducteur projettent de l'huile chaude par centrifugation aux satellites voisins. Cette recirculation d'huile a plusieurs inconvénients et notamment : augmentation des pertes par ventilation du réducteur, augmentation de la température des satellites, réduction de la marge au grippage, augmentation de la température de sortie d'huile pour le dimensionnement des échangeurs, taux d'air dans l'huile plus important, consommation d'huile plus importante ce qui diminue le niveau bas d'huile dans le réservoir d'huile, etc.

Une solution à ce problème consiste à disposer des déflecteurs ou des collecteurs d'huile entre les satellites. Les déflecteurs ont pour but de dévier l'huile projetée vers des moyens d'évacuation et de recyclage de l'huile. Les collecteurs d'huile ont pour but de collecter l'huile projetée et de l'acheminer vers les moyens d'évacuation et de recyclage de l'huile.

Cependant, il existe un besoin d'évacuer plus efficacement l'huile des collecteurs d'huile de l'art antérieur et il est constaté qu'une rétention d'huile entre les satellites et le collecteur apparait régulièrement. Ce phénomène a notamment pour conséquence le barbotage des satellites, l'augmentation des pertes par transfert de quantité de mouvement, la dégradation de l'efficacité de la lubrification, l'augmentation de la température de masse des pignons, et la réduction de la marge au grippage.

La présente invention propose une solution à au moins une partie des problèmes évoqués ci-dessus.

### Résumé de l'invention

L'invention propose un collecteur d'huile pour un dispositif de transmission de couple d'une turbomachine d'aéronef, ce collecteur d'huile étant configuré pour collecter de l'huile projetée, caractérisé en ce qu'il comprend :
- au moins une paroi externe formée au moins en partie par une structure en treillis, et
- au moins un récupérateur situé à une extrémité de la paroi externe et configuré pour récupérer l'huile captée par la paroi externe et destinée à s'écouler depuis cette paroi jusqu'au récupérateur.

L'intégration d'une structure en treillis au niveau de la paroi du collecteur permet un niveau de porosité qui freine plus ou moins intensément le flux d'huile et permet ainsi de récupérer l'huile centrifugée par les satellites pour l'évacuer « calmement » via l'intérieur du collecteur et éviter qu'elle soit re-brassée entre les dentures. L'invention permet ainsi d'améliorer l'évacuation d'huile tout en diminuant le risque d'apparition de bourrelets.

L'invention permet ainsi notamment d'assurer une bonne aspiration d'huile, de diminuer les pertes par transfert de quantité de mouvement, de diminuer la température de masse des dentures, diminuer l'échauffement des composants du dispositif et d'augmenter la marge au grippage.

Le collecteur, selon l'invention, peut comprendre une ou plusieurs des caractéristiques suivantes, prises isolément les unes des autres ou en combinaison les unes avec les autres :
- ladite paroi externe a une épaisseur constante et/ou ladite structure en treillis a une épaisseur constante ;
- ladite structure en treillis est formée par un grillage ; ce grillage peut avoir une forme ou composition constante ou au contraire qui varie ;
- ledit grillage est composé de motifs parallélépipédiques tels que des rectangles ou des carrés ;
- chacun des motifs comprend des barres reliées entre elles, certaines desdites barres s'étendant le long d'arêtes de ce motif ;
- le collecteur comprend deux parois externes indépendantes formées respectivement par deux structures en treillis, le collecteur présentant une forme générale en I et lesdites parois s'étendent latéralement sur les deux côtés les plus longs de ce I ;
- lesdites parois externes ont chacune une forme générale incurvée et ont des surfaces incurvées convexes en regard l'une de l'autre ; en variante, ces parois pourraient être droite ;
   -- lesdites parois externes sont des parois latérales et lesdits récupérateurs forment des parois d'extrémité entre ces parois latérales,
- un premier récupérateur s'étend entre des premières extrémités des deux parois externes et à une extrémité de la forme en I, et un second récupérateur s'étend entre des secondes extrémités opposées de ces parois externes et à une extrémité opposée de la forme en I ;
- le ou chaque récupérateur a une forme générale en U ;
- le ou chaque récupérateur comprend une cloison de fond s'étendant entre deux cloisons latérales, les cloisons latérales ayant chacune une forme générale incurvée et s'étendant dans le prolongement desdites parois externes ;
- ladite au moins une paroi externe et ledit au moins un récupérateur définissent une cavité interne du collecteur qui est libre, c'est-à-dire que cette cavité est vide et n'est pas occupée, pour faciliter l'écoulement de l'huile à l'intérieur du collecteur.

L'invention concerne également un dispositif de transmission de couple pour une turbomachine d'aéronef, ce dispositif comportant des dentures engrenées et au moins un collecteur d'huile tel que décrit ci-dessus, qui est disposé à côté d'une denture ou intercalé entre deux dentures et qui est configuré pour collecter de l'huile projetée par centrifugation par au moins une de ces dentures.

Avantageusement, chacune desdites parois externes s'étendant au moins en partie autour d'une des dentures et d'un axe de révolution de cette denture.

Le dispositif est par exemple un réducteur à train épicycloïdal ou planétaire, un boîtier d'accessoires, ou une boîte d'engrenages.

L'invention concerne également une turbomachine, en particulier d'aéronef, comportant un collecteur d'huile ou dispositif tel que décrit précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en coupe axiale d'une turbomachine ;
[Fig.2] la figure 2 est une vue schématique partielle en coupe axiale d'un dispositif de transmission de couple ;
[Fig.3] la figure 3 est une vue schématique en coupe transversale d'un dispositif de transmission de couple ;
[Fig.4] la figure 4 est une vue schématique en perspective détaillée du dispositif de transmission de couple comportant un collecteur ;
[Fig.5] la figure 5 est une vue schématique en perspective détaillée du dispositif de transmission de couple comportant le collecteur ;
[Fig.6] la figure 6 est une vue schématique en perspective détaillée du dispositif de transmission de couple comportant le collecteur ; et
[Fig.7] la figure 7 est une vue schématique en perspective détaillée d'un motif d'un treillis d'une paroi du collecteur.

### Description détaillée de l'invention

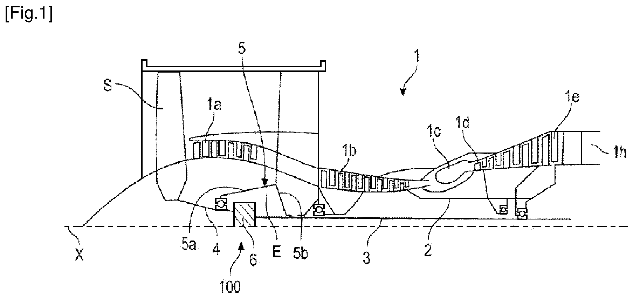

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entraîné à l'arbre BP 3 au moyen d'un dispositif de transmission de couple 100, en particulier un réducteur 6. Ce réducteur 6 est généralement de type planétaire ou épicycloïdal.

Bien que la description qui suit concerne un dispositif de transmission de couple 100 de type réducteur 6 planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie amont de la turbomachine 1. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

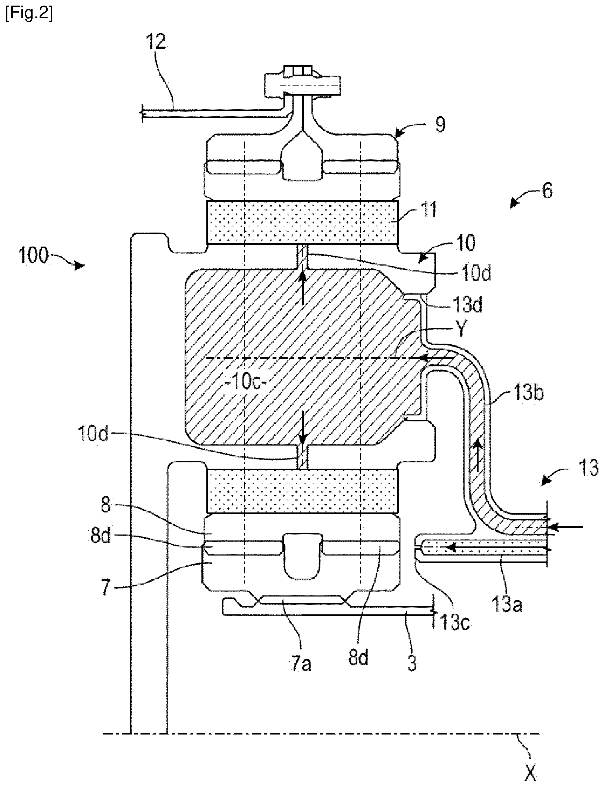

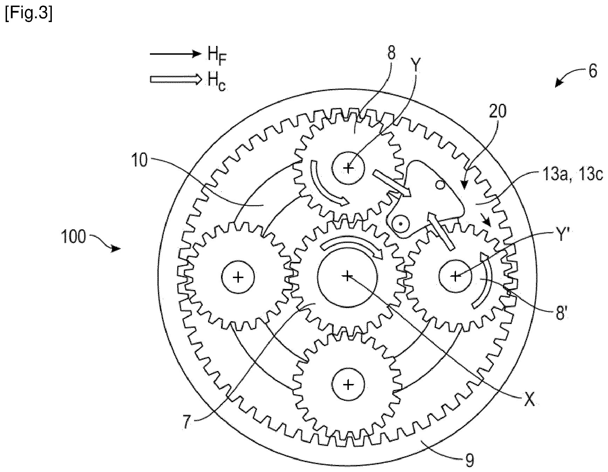

Les figures 2 et 3 montrent un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, 8', qui sont équirépartis sur le même diamètre autour de l'axe de rotation X. Chaque satellite 8, 8' présente des dentures 8d, 8d' sur sa circonférence. Ce diamètre est égal au double de l'entraxe de fonctionnement entre le solaire 7 et les satellites 8, 8'. Le nombre de satellites 8, 8' est généralement défini entre trois et sept pour ce type d'application.

L'ensemble des satellites 8, 8' est maintenu par un châssis appelé porte-satellites 10. Chaque satellite 8, 8' tourne autour de son propre axe Y, Y', et engrène avec la couronne 9.

En sortie nous avons :
- dans une configuration épicycloïdale, l'ensemble des satellites 8, 8' entraine en rotation le porte-satellite 10 autour de l'axe X de la turbomachine 1. La couronne 9 est fixée au carter moteur ou stator 5 via un porte-couronne 12 et le porte-satellites 10 est fixé à l'arbre de soufflante 4.
- dans une configuration planétaire, l'ensemble des satellites 8, 8' est maintenu par un porte-satellites 10 qui est fixé au carter moteur ou stator 5. Chaque satellite 8, 8' entraine la couronne 9 qui est rapportée à l'arbre de soufflante 4 via un porte-couronne 12.

Chaque satellite 8, 8' est monté libre en rotation à l'aide d'un palier 11, par exemple de type roulement ou palier hydrostatique.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur 13 est séparé en 2 parties en général chacune répétée du même nombre de satellite 8, 8'. Les injecteurs 13a ont pour fonction de lubrifier les dentures 8d, 8d'et les bras 13b ont pour fonction de lubrifier les paliers 11. L'huile est amenée vers des injecteurs 13a pour ressortir par des extrémités 13c afin de lubrifier par de l'huile dite froide (H_{F}) les dentures 8d, 8d' des satellites 8, 8', du solaire 7 et aussi de la couronne 9. L'huile est également amenée vers le bras 13b et circule via la bouche d'alimentation 13d du palier 11. L'huile circule ensuite à travers l'axe dans une ou des zones tampons 10c pour ensuite ressortir par les orifices 10d afin de lubrifier les paliers 11 des satellites 8, 8'.

Du fait des forces centrifuges, de l'huile dite chaude (H_{C}) de lubrification des dentures 8d, 8d' est projetée radialement vers l'extérieur par rapport aux axes Y, Y' des satellites 8, 8'. Pour éviter que cette huile perturbe la lubrification des satellites 8, 8' adjacents le réducteur 6 comprend au moins un collecteur d'huile 20 disposé à côté d'une denture 8d, 8d' ou intercalé entre deux dentures 8d, 8d', c'est-à-dire ici les dentures 8d, 8d'des satellites 8, 8'. Bien que la figure 3 représente un seul collecteur 20, le réducteur 6 comprend un collecteur 20 entre deux satellites 8, 8' adjacents et comprend donc autant de collecteurs 20 que de satellites 8, 8', à savoir quatre dans l'exemple représenté.

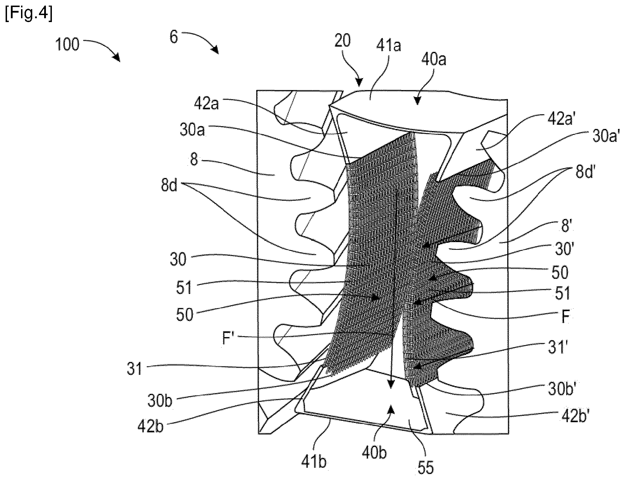

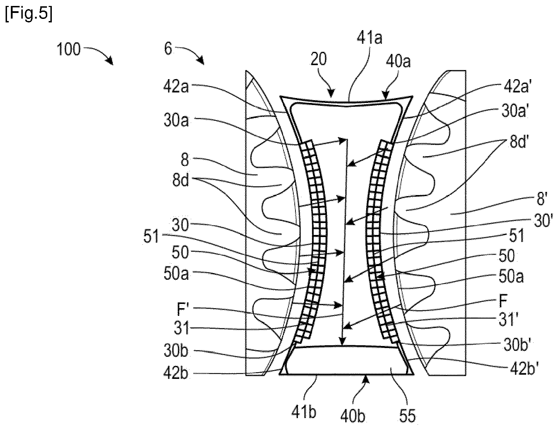

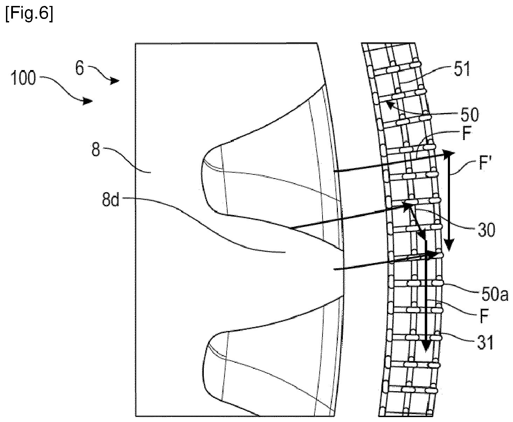

Les figures 4, 5, 6 représentent deux satellites 8, 8' adjacents du réducteur 6 situés de part et d'autre d'un des collecteurs d'huile 20. Le collecteur d'huile 20 est configuré pour collecter de l'huile projetée, en particulier projetée par centrifugation par au moins une des dentures 8d, 8d' appartenant ici aux satellites 8, 8'.

Le collecteur 20 comprend au moins une paroi 30, 30', présentant notamment une épaisseur constante, et ici deux parois 30, 30' qui sont en particulier à distance l'une de l'autre et par exemple intercalées entre deux dentures 8d, 8d' adjacentes.

Dans la présente demande, on entend par « paroi », une paroi externe qui s'étend donc à l'extérieur du collecteur et peut directement être exposée à un jet d'huile. Chacune des parois comporte donc une surface externe définissant une surface externe du collecteur.

Les deux parois 30, 30' sont en particulier indépendantes, le collecteur 20 présentant par exemple une forme générale en I et les parois 30, 30' s'étendant latéralement sur les deux côtés les plus longs de ce I. Ces parois 30, 30' ont notamment des surfaces 31, 31' incurvées convexes en regard l'une de l'autre. Chaque paroi 30, 30' a par exemple une forme générale incurvée et s'étend notamment respectivement au moins en partie autour de la denture 8d, 8d' en face de laquelle elle se trouve et d'un axe de révolution Y, Y' de cette denture 8d, 8d'.

Chacune des parois 30, 30' est en particulier formées respectivement au moins en partie par une structure 50 en treillis, également appelée lattice. La structure 50 en treillis a notamment une épaisseur constante. La structure 50 en treillis est en particulier formée par un grillage 51. Ce grillage 51 peut avoir une forme ou composition constante ou au contraire qui varie. Le grillage 51 est composé de motifs 50a ou mailles parallélépipédiques tels que des rectangles ou des carrés. La structure 50 en treillis est en particulier formée par la répétition spatiale, soit pour la matière soit pour le vide, d'un motif ou maille 50a unique. Le motif 50a est notamment réalisé par l'interconnexion de formes simples à choisir notamment parmi des sphères ou ovoïdes et des barreaux de section constante (ou variable), notamment des cercles, des rectangles ou des octogones. Le motif 50a est agencé de manière à ce que les vides entre la matière communiquent de façon à organiser des chemins traversant la matière pour le passage de l'huile.

Le collecteur 20 comprend également au moins un récupérateur 40a, 40b situé à une extrémité 30a, 30a', 30b, 30b' de la paroi 30, 30'.

Le collecteur 20 comprend ici deux récupérateurs 40a, 40b. Un premier 40a des récupérateurs s'étend entre des premières extrémités 30a, 30a' des deux parois 30, 30' et à une extrémité de la forme en I, et un second 40b des récupérateurs s'étend entre des secondes extrémités 30b, 30b' opposées de ces parois 30, 30' et à une extrémité opposée de la forme en I.

Les récupérateurs 40a, 40b sont configurés pour récupérer l'huile captée par les parois 30, 30' et destinée à s'écouler depuis les parois 30, 30' jusqu'à chacun des récupérateurs 40a, 40b.

Les récupérateurs 40a, 40b ont notamment une forme générale en U.

Les récupérateurs 40a, 40b comprennent une cloison de fond 41a, 41b qui s'étend entre deux cloisons latérales 42a, 42a', 42b, 42b'. Les cloisons latérales 42a, 42a', 42b, 42b' ont chacune une forme générale incurvée et s'étendent dans le prolongement des parois 30, 30'. Les cloisons latérales 42a, 42a', 42b, 42b' d'une même paroi 30, 30' sont donc également incurvées convexes en regard l'une de l'autre. Chaque cloison latérale 42a, 42a', 42b, 42b' a une forme générale incurvée et s'étend respectivement en partie autour de la denture 8d, 8d' située en vis à vie et de l'axe de révolution Y, Y' de cette denture 8d, 8d'.

Les cloisons latérales 42a, 42a', 42b, 42b' forment avec la cloison de fond 41a, 41b la forme en U de chaque récupérateur 40a, 40b.

Plus précisément, dans un prolongement de la paroi 30 se trouve la cloison latérale 42a du premier récupérateur 40a, l'extrémité 30a se trouvant entre la paroi 30 et la cloison latérale 42a. Dans le prolongement opposé de la paroi 30 se trouve la cloison latérale 42b du deuxième récupérateur 40b, l'extrémité 30b se trouvant entre la paroi 30 et la cloison latérale 42b.

De la même manière, dans un prolongement de la paroi 30' se trouve la cloison latérale 42a' du premier récupérateur 40a, l'extrémité 30a' se trouvant entre la paroi 30' et la cloison latérale 42a'. Dans le prolongement opposé de la paroi 30' se trouve la cloison latérale 42b' du deuxième récupérateur 40b, l'extrémité 30b' se trouvant entre la paroi 30' et la cloison latérale 42b'.

Le collecteur 20 présente ainsi une cavité formée par les parois 30, 30' et les récupérateurs 40a, 40b.

L'huile, projetée par les dentures 8d, 8d', vient pénétrer dans la matière de la structure 50 en treillis de la paroi 30, 30'. L'huile est alors freinée et s'écoule à travers la structure 50 en treillis et traverse les surfaces 31, 31' des parois 30, 30' du collecteur 20 selon une direction référencée F. L'huile est ensuite dirigée vers le récupérateur 40a, 40b du collecteur 20 selon une direction référencée F'. L'huile (référencée 55 lors de son passage sur le récupérateur 40a, 40b) sera ensuite évacuée.

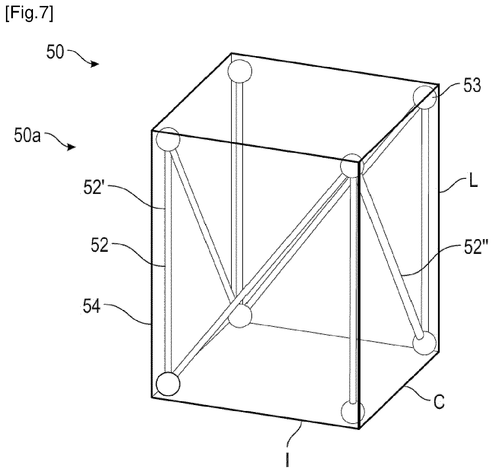

Chacun des motifs 50a, comme représenté sur la figure 7, comprend notamment des barres 52 reliées entre elles. Ce motif 50a occupe notamment un volume en forme de parallélépipède, en particulier parallélépipède rectangle présentant un grand côté L, un côté intermédiaire I et un petit côté c. Certaines 52' des barres 52 s'étendent le long d'arêtes 54 de ce motif 50a, ici quatre barres 52' s'étendent le long de quatre arêtes 54 de ce motif 50a, en particulier les quatre arêtes 54 formant la dimension la plus longue L du parallélépipède rectangle. Certaines 52" des barres 52 s'étendent le long de faces de ce motif 50a, ici quatre barres 52" s'étendent le long de quatre faces de ce motif 50a, en particulier sur les faces formant la dimension la plus longue du parallélépipède rectangle, c'est-à-dire les deux faces formées par les dimensions longues L et intermédiaire I et les deux faces formées par les dimensions longues L et courte c, par exemple en reliant entre eux deux des sommets d'une même face du parallélépipède rectangle en décrivant une diagonale sur chacune des faces.

La structure 50 en treillis comprend ainsi ici huit barres 52.

Chacune des barres 52 est terminée par une boule 53, située à un sommet du parallélépipède rectangle. Plusieurs barres 52 peuvent se terminer par la même boule 53 si ces barres se terminent sur le même sommet du parallélépipède rectangle. La structure 50 en treillis comprend ici huit boules 53, c'est-à-dire une boule à chaque sommet du parallélépipède rectangle.

Un exemple particulier de motifs 50a a été décrit ici mais il est évident que la structure 50 en treillis peut prendre une infinité de forme. Il y a en effet une infinité de motifs 50a qui pourraient être utilisées en lieu et place de celui décrit ici, plus ou moins efficient en fonction de leur forme.

La structure 50 en treillis permet de récupérer l'huile du réducteur 6 pour ensuite permettre de l'évacuer doucement. Le niveau de porosité de la structure 50 permet de freiner plus ou moins intensément le flux d'huile en fonction des besoins. Les motifs 50a peuvent également être orientés, notamment grâce au positionnement des différentes barres 52. Les motifs 50a peuvent ainsi être réalisés en privilégiant une certaine direction, permettant de récupérer efficacement l'huile tout en l'empêchant de déborder. Il est par exemple possible de définir le gain d'« absorption » en fonction de la géométrie de la structure 50 en treillis pour améliorer au mieux la lubrification. Comme décrit précédent, le dispositif 100 de l'invention est en particulier un réducteur 6 à train épicycloïdal ou planétaire. Ce dispositif 100 pourrait aussi être un boîtier d'accessoires également nommé par l'acronyme anglais AGB désignant les termes anglo-saxons « *Accessory Gear Box* », ou une boîte d'engrenages également nommé par l'acronyme anglais RGB désignant les termes anglo-saxons « *Reduction Gear Box* ». Il pourrait également être intégré à des parois « droites » en simple déflecteur.

L'invention concerne également une turbomachine 1, en particulier d'aéronef, comportant un collecteur d'huile 20 tel que décrit précédemment.

L'invention apporte plusieurs avantages et notamment permet d'assurer une bonne aspiration d'huile, de diminuer les pertes par transfert de quantité de mouvement, de diminuer la température de masse des satellites 8, 8' et l'échauffement des composants et d'augmenter la marge au grippage.

Le collecteur 20 de l'invention a été décrit en relation avec un dispositif de réduction de couple mais pourrait s'appliquer à d'autres domaines sans sortir du cadre de l'invention.

## Revendications

1. Collecteur d'huile (20) pour un dispositif de transmission de couple (100) d'une turbomachine d'aéronef (1), ce collecteur d'huile (20) étant configuré pour collecter de l'huile projetée, **caractérisé en ce qu'**il comprend :
- au moins une paroi externe (30, 30') formée au moins en partie par une structure (50) en treillis, et
- au moins un récupérateur (40a, 40b) d'huile situé à une extrémité (30a, 30a', 30b, 30b') de la paroi externe (30a, 30') et configuré pour récupérer l'huile captée par la paroi (30, 30') et destinée à s'écouler depuis cette paroi externe (30, 30') jusqu'au récupérateur (40a, 40b).

2. Collecteur d'huile (20) selon la revendication 1, dans lequel ladite paroi externe (30, 30') a une épaisseur constante et/ou ladite structure (50) en treillis a une épaisseur constante.

3. Collecteur d'huile (20) selon la revendication 1 ou 2, dans lequel ladite structure (50) en treillis est formée par un grillage (51).

4. Collecteur d'huile (20) selon la revendication précédente, dans lequel ledit grillage (51) est composé de motifs (50a) parallélépipédiques tels que des rectangles ou des carrés.

5. Collecteur d'huile (20) selon la revendication précédente, dans lequel chacun desdits motifs (50a) comprend des barres (52) reliées entre elles, certaines desdites barres (52) s'étendant le long d'arêtes (54) de ce motif.

6. Collecteur d'huile (20) selon l'une des revendications précédentes, dans lequel il comprend deux parois externes (30, 30') indépendantes chacune formée au moins en partie par une structures (50) en treillis, le collecteur (20) présentant une forme générale en I et lesdites parois (30, 30') s'étendent latéralement sur les deux côtés les plus longs de ce I.

7. Collecteur d'huile (20) selon la revendication précédente, dans lequel lesdites parois externes (30, 30') ont chacune une forme générale incurvée et ont des surfaces (31, 31') incurvées convexes en regard l'une de l'autre.

8. Collecteur d'huile (20) selon la revendication 6 ou 7, dans lequel un premier récupérateur (40a) s'étend entre des premières extrémités (30a, 30a') des deux parois externes (30, 30') et à une extrémité de la forme en I, et un second récupérateur (40b) s'étend entre des secondes extrémités (30b, 30b') opposées de ces parois externes (30, 30') et à une extrémité opposée de la forme en I.

9. Collecteur d'huile (20) selon l'une des revendications précédentes, dans lequel le ou chaque récupérateur (40a, 40b) a une forme générale en U.

10. Collecteur d'huile (20) selon la revendication 9, en combinaison avec l'une des revendications 7 ou 8, dans lequel le ou chaque récupérateur (40a, 40b) comprend une cloison de fond (41a, 41b) s'étendant entre deux cloisons latérales (42a, 42a', 42b, 42b'), les cloisons latérales (42a, 42a', 42b, 42b') ayant chacune une forme générale incurvée et s'étendant dans le prolongement desdites parois externes (30, 30').

11. Collecteur d'huile (20) selon l'une des revendications précédentes, dans lequel ladite au moins une paroi externe (30, 30') et ledit au moins un récupérateur (40a, 40b) définissent une cavité interne du collecteur qui est libre.

12. Dispositif de transmission de couple (100) pour une turbomachine d'aéronef (1), ce dispositif comportant des dentures engrenées (8d, 8d') et au moins un collecteur d'huile (20) selon l'une des revendications précédentes, qui est disposé à côté d'une denture (8d, 8d') ou intercalé entre deux dentures (8d, 8d') et qui est configuré pour collecter de l'huile projetée par centrifugation par au moins une de ces dentures (8d, 8d').

13. Dispositif (100) selon la revendication précédente, dans lequel, le collecteur (20) étant tel que défini à l'une des revendications 7, 8 ou 10, chacune desdites parois externes (30, 30') s'étendant au moins en partie autour d'une des dentures (8d, 8d') et d'un axe de révolution (Y, Y') de cette denture (8d, 8d').

14. Dispositif (100) selon la revendication 12 ou 13, dans lequel le dispositif (100) est un réducteur (6) à train épicycloïdal ou planétaire, un boîtier d'accessoires, ou une boîte d'engrenages.

15. Turbomachine (1), en particulier d'aéronef, comportant collecteur d'huile (20) selon l'une des revendications 1 à 11 ou un dispositif de transmission de couple (100) selon l'une des revendications 12 à 14.
